# EUROPÄISCHE PATENTSCHRIFT

(11) **EP 3 367 835 B1**
(45) Veröffentlichungstag und Bekanntmachung des Hinweises auf die Patenterteilung: **22.04.2020**
(21) Anmeldenummer: 16798417.8
(22) Anmeldetag: 26.10.2016
(51) Int. Cl.: A43B 13/04, A43B 13/12, A43B 13/16, A43B 13/18, B29D 35/08, B29D 35/14, A43B 7/32, A43B 23/08

(54) **SOHLE FÜR EINEN SICHERHEITSSCHUH, SOWIE SICHERHEITSSCHUH**
SOLE FOR A SAFETY SHOE, AND SAFETY SHOE
SEMELLE POUR CHAUSSURE DE SÉCURITÉ, ET CHAUSSURE DE SÉCURITÉ

(30) Priorität: 26.10.2015 DE 102015118251
(43) Veröffentlichungstag der Anmeldung: 05.09.2018
(73) Patentinhaber: Elten GmbH, 47589 Uedem (DE)
(72) Erfinder: VAN ELTEN, Heiner, 47589 Uedem (DE)
(74) Vertreter: Rösler Rasch van der Heide & Partner
(86) Internationale Anmeldenummer: PCT/EP2016/075871
(87) Internationale Veröffentlichungsnummer: WO 2017/072202

(56) Entgegenhaltungen:
- EP-A1- 2 798 969
- EP-A2- 2 649 896
- WO-A1-2007/082838
- WO-A1-2009/039555
- CH-A- 509 779
- DE-A1- 4 129 361
- DE-A1-102013 202 306
- US-A1- 2011 252 670
- US-A1- 2016 278 481

## Beschreibung

Die Erfindung betrifft eine Sohle für einen Sicherheitsschuh, sowie Verfahren zur Herstellung einer derartigen Sohle und Verfahren zur Herstellung eines derartigen Schuhs.

Schuhe bestehen in der Regel aus einer Sohle, worunter der unter dem Fuß befindliche Anteil des Schuhs verstanden wird, und einem Schuhschaft, der den über der Sohle befindlichen und den Fuß von oben, von vorne, von hinten und von der Seite umgebenden Teil des Schuhs bezeichnet, welcher mit der Sohle verbunden ist. Eine Funktion von Schuhen besteht darin, den Fuß schützend zu umgeben, was natürlich insbesondere bei Sicherheitsschuhen von großer Bedeutung ist. Allerdings sollten Schuhe möglichst auch weitere Aufgaben erfüllen, beispielsweise den Laufkomfort erhöhen, etwa das Laufen möglichst Energie sparend zu gestalten oder Krafteinwirkungen, die beim Laufen auftreten, abzudämpfen. In diesem Zusammenhang kommt der Schuhsohle eine wichtige Aufgabe zu, da sie die Schnittstelle zwischen dem Fuß und dem Untergrund, auf dem sich der Schuh bewegt, darstellt.

Aus diesem Grund wurden verschiedenste Sohlen-Konstruktionen entworfen, um Schuhe bereitzustellen, die ein Energie sparendes Laufen ermöglichen. So beschreibt die Patentschrift DE 102013202306 B4 eine Sohle für einen Schuh, die zufällig angeordnete Partikel eines expandierten Materials aufweist, welche sich durch gute Elastizitäts- und Dämpfungseigenschaften auszeichnet. US 2013/0160329A1 offenbart auch eine Sohlenkonstruktion mit einem geschäumten Dämpfungselement, das sich im Fersenbereich einer Mittelsohle befindet.

Dennoch besteht weiterhin Bedarf nach weiteren Sohlen-Konstruktionen.

Die Aufgabe der Erfindung besteht darin, alternative Lösungen für eine Schuhsohle bereitzustellen, mit der ein Energie sparendes Laufen möglich ist. Die Sohle ist vorgesehen zur Verwendung für einen Sicherheitsschuh, also einen Schuh, der mit seiner Konstruktion einen über das Maß normaler Schuhe hinausgehenden Schutz des davon umschlossenen Fußes ermöglicht, und dementsprechend beispielsweise besonderen Belastungen standhalten und/oder in Situationen einsetzbar ist, in denen beispielsweise eine erhöhte Beschädigungsgefahr besteht.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe ist in einem ersten Aspekt gelöst durch Sohle für einen Sicherheitsschuh, umfassend eine geschlossene Laufsohle, die Polyurethan, thermoplastisches Polyurethan und/ oder Gummi, oder eine Kombination wenigstens zweier der vorgenannten Materialien umfasst, wobei die Laufsohle eine Außenfläche und eine Innenfläche aufweist, weiterhin umfassend eine Brandsohle sowie eine zwischen der Laufsohle und der Brandsohle angeordnete Zwischensohle aus Polyurethan, wobei
- die Innenfläche der Laufsohle mit der Zwischensohle wenigstens abschnittsweise verbunden ist,
- die Zwischensohle ein Dämpfungsmaterial, das expandiertes thermoplastisches Polyurethan und/ oder expandiertes thermoplastisches Polyethylen umfasst, wenigstens teilweise umgibt, wobei zwischen der Laufsohle und dem Dämpfungsmaterial eine durchgängige Lage der Zwischensohle angeordnet ist, und
- die Brandsohle mit der Zwischensohle wenigstens indirekt verbunden ist und das Dämpfungsmaterial wenigstens teilweise abdeckt,
wobei die Zwischensohle das Dämpfungsmaterial an wenigstens einem Seitenbereich der Sohle wenigstens teilweise abdeckt, vorzugsweise wenigstens 40 % einer Seitenfläche des Dämpfungsmaterials abdeckt,
wobei die Zwischensohle in wenigstens einem Teil eines Seitenbereichs der Sohle mittels eines Zwischensohlen-Durchbruchs im hinteren Fersen-Seitenbereich und mittels eines Zwischensohlen-Durchbruchs im vorderen Fersen-Seitenbereich das Dämpfungsmaterial nicht abdeckt,und
wobei das Dämpfungsmaterial- ein zusammenhängendes Formteil ist, das sich über 60 bis 90 % der Gesamtlänge der Sohle erstreckt, oder- eine Anordnung mehrerer kleiner Formteile mit einer Erstreckung von wenigstens 1 cm darstellt.

Unter Gummi wird vorliegend ein Werkstoff auf der Grundlage von Kautschuk, insbesondere vulkanisiertem Kautschuk, verstanden, dem gegebenenfalls Zusatzstoffe beigemengt sind. Beispiele für Gummi sind Weichgummi, der im Rahmen der Vulkanisation einen Schwefelanteil von 5-10 Gewichtsprozent erhält, Hartgummi, der im Rahmen der Vulkanisation einen Schwefelanteil von 30-50 Gewichtsprozent erhält, sowie zwischen Weichgummi und Hartgummi liegende Gummiarten. Unter Kautschuk wird Naturkautschuk, synthetischer Kautschuk oder eine Mischung dieser beiden vorgenannten Arten verstanden. Mit Naturkautschuk (IUPAC-Kürzel: NR; alle weiteren Kürzel in diesem Absatz entsprechen ebenfalls den Abkürzungen der IUPAC) werden Polymere auf Isopren-Basis bezeichnet, die zu cis-1,4- Polyisopren polymerisiert sind. Dementsprechend ist synthetischer Kautschuk beispielsweise künstlich hergestelltes cis-1,4-Polyisopren. Weitere nicht beschränkende Beispiele für synthetischen Kautschuk sind Isopren-Kautschuk (IR), Butadien-Kautschuk (BR), Styrol-Butadien-Kautschuk (SBR), Acryl-Butadien-Kautschuk, Acryl-Kautschuk, Nitril-Butadien-Kautschuk (NBR), Ethylen-Propylen-Dien-Kautschuk (EPDM), Chlor-Butadien-Kautschuk (CR), Fluorkautschuk (FKM), Faktis und Silikon-Kautschuk (SIR), oder Gemische zweier oder mehrerer Vertreter davon.

Unter Polyurethanen werden wie fachüblich Kunststoffe verstanden, welche die Urethan-Gruppe (-NH-CO-O-) umfassen. Unter thermoplastischen Polyurethanen (nachfolgend auch als "TPU" bezeichnet) werden Polyurethane verstanden, die sich bei Normaltemperatur wie klassische Elastomere verhalten, sich jedoch bei höheren Temperaturen plastisch verformen lassen, wobei vorliegend unter Normaltemperatur Raumtemperatur oder ein Temperaturbereich von beispielsweise -20 °C bis +40 °C, -10 °C bis +40 °C, insbesondere +5 °C bis etwa +35 °C verstanden wird, und unter höheren Temperaturen solche, die deutlich darüber liegen, beispielsweise mehr als 80 °C über diesen Temperaturen. Vorzugsweise werden Polyurethane oder thermoplastische Polyurethane verwendet, bei denen die daraus gebildeten Sohlen einen Temperatureinsatzbereich bis wenigstens 120 °C haben. Als thermoplastisches Polyurethan wird vorzugsweise nicht ein Polyurethan eingesetzt, welches direkt aus einer Reaktion eines Polyols mit einem Polyisocyanat erhalten wird, sondern zunächst über einen Zwischenschritt in ein Granulat überführt wird, welches eingesetzt und thermisch verformt wird. Dieses thermoplastische Polyurethan ist üblicherweise gegenüber herkömmlichem, direkt aus der vorgenannten Reaktion erhaltenem Polyurethan robuster, abriebfester und elastischer.

Beispiele für thermoplastische Elastomere sind Elastollan® des Herstellers BASF SE, oder Desmopan®, Texin® oder Utechllan® des Herstellers Bayer AG (Leverkusen, Deutschland).

Im Rahmen der vorliegenden Erfindung wird unter einer geschlossenen Laufsohle eine Laufsohle verstanden, die entweder frei von Durchbrüchen ist, oder Durchbrüche aufweist, die vollständig von einem Material ausgefüllt sind. Beispielsweise schließt sich dieses Material unter Kontakt an den Rand des Durchbruchs an, oder ist mit diesem stoffschlüssig verbunden, beispielsweise durch Verklebung oder Verschmelzung. Das Material, welches den Durchbruch ausfüllt, unterscheidet sich beispielsweise durch die Farbe oder die chemische Zusammensetzung von dem übrigen Material, welches die Laufsohle bildet. Beispielsweise kann eine Laufsohle aus thermoplastischem Polyurethan einen Durchbruch aufweisen, indem ein andersfarbiges thermoplastisches Polyurethan oder ein anderes Material, beispielsweise ein Gummi, eingesetzt ist. Vorzugsweise ist das Material, welches den Durchbruch ausfüllt, stoffschlüssig mit der Laufsohle verbunden, sodass vorteilhaft keine Ritzen in der Laufsohle vorliegen, welche ein Eindringen oder Aufsaugen von Flüssigkeit ermöglichen, und auch keine strukturellen Schwachstellen in der Laufsohle vorliegen.

Unter expandiertem thermoplastischem Polyurethan (nachfolgend auch als "eTPU" bezeichnet) wird ein im Wesentlichen geschlossenzelliger thermoplastischer Polyurethanschaum verstanden. Durch die geschlossenzellige Struktur wird vorteilhaft eine hohe Rückprall-Elastizität bewirkt. Dementsprechend lässt sich ein expandiertes thermoplastisches Polyurethan vorteilhaft als Dämpfungsmaterial in Sohlen einsetzen, da die Sohle sich beim Auftreffen auf den Untergrund im Bereich des expandierten thermoplastischen Polyurethans komprimiert, wodurch der Aufprall abgemildert wird, und anschließend die Energie beim Entspannen wieder freigibt. Ein Beispiel für ein eTPU ist Infinergy® des Herstellers BASF SE (Ludwigshafen, Deutschland). Analog bezeichnet ein expandiertes thermoplastisches Polyethylen (nachfolgend auch als "eTPE" bezeichnet) ein expandiertes thermoplastisches Polyethylen mit vergleichbaren Eigenschaften wie vorstehend für eTPU beschrieben. Ein Beispiel für ein eTPE ist Neopolen® (Neopolen EPE) des gleichen Herstellers, oder Plastazote® von Zotefoams Plc. (Croydon, Vereinigtes Königreich), welches beispielsweise in einem Raumgewichtsbereich von 15 kg/Kubikmeter bis 115 kg/Kubikmeter angeboten wird. Unter einem im Wesentlichen geschlossenzelligen thermoplastischen Polyurethanschaum bzw. Polyethylenschaum wird verstanden, dass die überwiegende Anzahl von Zellen dieser Schäume geschlossenzellig sind, wobei es herstellungsbedingt oder an den Randbereichen nicht auszuschließen ist, dass dennoch einige Zellen mit Nachbarzellen in Verbindung stehen. Beispielsweise sind wenigstens 80 % der Zellen oder wenigstens 90 % der Zellen geschlossen.

Das Dämpfungsmaterial enthält entweder eTPU oder eTPE oder besteht daraus, oder umfasst eine Mischung aus eTPU und eTPE, beispielsweise eine oder mehrere Zonen, die eTPU umfassen, und eine oder mehrere Zonen, die eTPE umfassen, oder besteht daraus.

Das Dämpfungsmaterial in der Sohle stellt keine Ansammlung verteilter Partikel dar, sondern ist ein zusammenhängendes Formteil, das sich über 60-90 % der Gesamtlänge der Sohle, gemessen vom Fersenende bis zum Zehenende, erstreckt, oder eine Anordnung mehrerer kleinerer Formteile, die eine Erstreckung von wenigstens 1 cm haben. Die Formteile werden beispielsweise hergestellt, indem Ausgangspartikel, die vom Hersteller beispielsweise in einer Größe von 5-10 mm geliefert werden, in einem Formteilautomaten unter Druck und erhöhter Temperatur oberhalb des Erweichungsbereichs miteinander verschweißt werden. Vorteilhaft lässt sich durch derartige Formteile das Dämpfungsmaterial in einer definierten Form bereitstellen, die ihrerseits definierte Dämpfungseigenschaften verleiht, auf das Dämpfungsmaterial einwirkende Kräfte kontrolliert innerhalb der Anzahl kleinerer Formteile oder insbesondere innerhalb des zusammenhängenden Formteils verteilt und ableitet, und die Herstellung der Sohle im Vergleich mit einer Vielzahl einzelner, kleiner Partikel vereinfacht.

Die vorgenannten Materialien können entweder in reiner Form vorliegen oder Zusatzstoffe enthalten, beispielsweise Farbstoffe, UV-Stabilisatoren, Stabilisatoren gegen chemische Agenzien, Zusatzstoffe im Zusammenhang mit ESD-Eigenschaften, um elektrostatische Aufladung zu verringern oder kontrolliert abzuleiten, und dergleichen.

Die Brandsohle, die auch als Innensohle bezeichnet werden kann, dient als Auflagefläche für die Fußsohle. Der Kontakt mit der Fußsohle erfolgt dabei entweder direkt oder indirekt über eine oder mehrere zwischengeschaltete Lagen, die mit der Brandsohle verbunden sein können oder lose aufgelegt sind, wie etwa Einlagesohlen. Die Brandsohle besteht beispielsweise aus einem fachüblichen Material, beispielsweise einem Textilmaterial, einem Filzmaterial, einem Korkmaterial, einem Leder- oder Kunstledermaterial, einem Kunststoffmaterial oder einem Verbundmaterial, beispielsweise einem Verbundmaterial aus zwei oder mehr der vorgenannten Materialien, gemäß besonderen Weiterbildungen aus einem schweißabsorbierenden Material. Die Brandsohle ist wenigstens indirekt mit der Zwischensohle verbunden, beispielsweise direkt über Verklebung, Verschmelzung und/oder Vernähung, oder indirekt über beispielsweise Verklebung, Verschmelzung und/oder Vernähung mit einem zwischen der Brandsohle und der Zwischensohle angeordneten Material, beispielsweise einem Textilmaterial, einem Filzmaterial, einem Vliesmaterial oder einem geschlossenzelligen oder vorzugsweise offenzelligen Schaumstoff. Das Dämpfungsmaterial wird durch die Brandsohle wenigstens teilweise abgedeckt, entweder direkt, wobei die Brandsohle in direktem Kontakt mit dem Dämpfungsmaterial steht, oder indirekt, wobei ein oder mehrere Materialien zwischen der Brandsohle und dem Dämpfungsmaterial angeordnet sind. Beispielsweise können im Falle einer indirekten Abdeckung noch Anteile der Zwischensohle zwischen der Brandsohle und dem Dämpfungsmaterial angeordnet sein. Gemäß einer besonderen Weiterbildung deckt die Brandsohle das Dämpfungsmaterial direkt ab. Da nach Einbau der Sohle in einen Schuh der Fuß eines Benutzers sein Gewicht auf die Brandsohle aufbringt, wird durch ein direkt von der Brandsohle abgedecktes Dämpfungsmaterial dieses Gewicht vorteilhaft auf das Dämpfungsmaterial abgeleitet, das seinerseits vorteilhafte Dämpfungseigenschaften aufweist. Bei jedem Auftreffen der Sohle auf einen Untergrund wird somit der Aufprall in Bezug auf den Fuß eines Benutzers gemildert, ohne dass die Qualität der Dämpfung durch weitere, zwischen der Brandsohle und dem Dämpfungsmaterial angeordnete Materialien herabgesetzt wird.

Die Laufsohle dient mit ihrer Außenfläche als Kontaktfläche zum Laufuntergrund und besteht vorzugsweise aus einem abriebfesten Material, beispielsweise einem abriebfesten Polyurethan. Ein Beispiel für ein derartiges Polyurethan ist Elastopan® des Herstellers BASF SE (Leverkusen, Deutschland). Die Laufsohle ist vorzugsweise porenfrei. Weiterhin weist die Laufsohle vorzugsweise gegenüber der Zwischensohle und dem Dämpfungsmaterial eine höhere Dichte auf, beispielsweise eine Dichte im Bereich von 500 kg/Kubikmeter bis 1500 kg pro Kubikmeter, wie etwa 800 kg/Kubikmeter bis 1200 kg pro Kubikmeter pro Kubikzentimeter, beispielsweise 1000 kg pro Kubikmeter. Insbesondere bei Ausgestaltung der Sohle als Sohle zur Verwendung in einem Sicherheitsschuh ist das dafür verwendete Material vorzugsweise je nach geplantem Einsatzbereich des Sicherheitsschuhs antistatisch und/oder lösungsmittelresistent und/oder säureresistent und/oder basenresistent und/oder temperaturbeständig und/oder schwer entflammbar und/oder hitzeresistent.

Die Innenfläche der Laufsohle dient als Kontaktfläche zur Zwischensohle, die zwischen der Laufsohle und der Brandsohle angeordnet ist, wobei die Innenfläche der Laufsohle wenigstens abschnittsweise, vorzugsweise jedoch durchgängig mit der Zwischensohle verbunden ist. Die Zwischensohle umgibt das eTPU und/oder eTPE wenigstens teilweise. Da eTPU bzw. eTPE aufgrund der gasgefüllten Zellen eine für mechanische Beschädigungen anfällige Schaumstoffstruktur aufweisen, wird vorteilhaft durch die Zwischensohle, die das eTPU und/oder das eTPE umgibt, ein entsprechender Schutz bereitgestellt. Gemäß einer Weiterbildung handelt es sich bei dem Polyurethan der Zwischensohle um ein porenhaltiges Polyurethan, beispielsweise um ein geschlossenzelliges Polyurethan, vorzugsweise um ein offenzelliges oder ein weitgehend offenzelliges Polyurethan. Da in der Sohle die Zwischensohle zwischen der Laufsohle und der Brandsohle angeordnet ist, wird bei einer Verwendung einer derartigen Sohle in einem Schuh vorteilhaft eine erste Dämpfung des Aufpralls beim Auftreffen auf einen Laufuntergrund bewirkt. Vor allem bei der Verwendung der Sohle für einen Sicherheitsschuh ist dies besonders vorteilhaft, da auf die Füße von Trägern von Sicherheitsschuhen häufig erhöhte Lasten einwirken, beispielsweise durch zusätzliche schwere Sicherheitsausrüstung oder durch vom Träger transportierte Lasten. Aus diesem Grund ist insbesondere eine verbesserte Dämpfung beim Auftreffen eines Fußes auf den Untergrund und eine effiziente Energierückgewinnung durch Freigabe der gespeicherten Energie besonders vorteilhaft. Gemäß einer Weiterbildung umfasst das Polyurethan der Zwischensohle ein antistatisches Polyurethan. Selbst wenn in diesem Fall das eTPU und/oder eTPE nur geringe antistatische Eigenschaften aufweist, können durch das antistatische Polyurethan der Zwischensohle, welches das eTPU und/oder eTPE wenigstens teilweise umgibt, die Antistatik-Eigenschaften der Sohle und somit eines Schuhs, für den die Sohle verwendet wird, gewährleistet werden. Antistatik-Eigenschaften sind für Schuhe vorteilhaft, um beispielsweise unangenehme elektrische Entladungen zu vermeiden, die nach einem Gehen auf einem eine elektrische Aufladung begünstigenden Untergrund erfolgen können, beispielsweise beim Gehen auf bestimmten Teppichen oder Bodenbelägen. Insbesondere für Sicherheitsschuhe, bei denen elektrische Aufladung und Funkenschlag bei Entladung aus Gründen der Arbeitssicherheit vermieden werden müssen, sind Antistatik-Eigenschaften besonders vorteilhaft. Ein Beispiel für ein antistatisches Polyurethan, das zur Beimischung zu anderen Grundstoffen geeignet ist, ist das thermoplastische Polyurethan "Elastostat®" des Herstellers BASF SE (Ludwigshafen, Deutschland).

Die Zwischensohle deckt das Dämpfungsmaterial zur Laufsohle hin ab. Die Abdeckung des Dämpfungsmaterials durch die Zwischensohle zur Laufsohle hin ist vollständig, sodass zwischen Laufsohle und dem Dämpfungsmaterial eine durchgängige Lage der Zwischensohle angeordnet ist. Vorteilhaft werden dadurch extreme Kraftspitzen, die beispielsweise auftreten, wenn die Laufsohle ausschließlich auf eine Treppenkante auftrifft, unabhängig von dem Ort ihres Einwirkens nicht direkt von der Laufsohle auf das Dämpfungsmaterial übertragen, sondern über die zwischengelagerte Zwischensohle abgemildert. In wenigstens wird einem Seitenbereich der Sohle das Dämpfungsmaterial durch die Zwischensohle wenigstens teilweise abgedeckt. Das Dämpfungsmaterial tritt in diesem Bereich somit nicht ungeschützt zutage, sondern wird nach außen hin durch die Zwischensohle abgedeckt, welche einen Schutz vor mechanischen Beschädigungen bereitstellt, beispielsweise Schutz vor auf dem Untergrund befindlichen Gegenständen, oder Schutz beim seitlichen Abrutschen des die Sohle enthaltenden Schuhs von einer Treppenstufe oder einem Randstein. Im Gegensatz zu einer Sohle, bei der das Dämpfungsmaterial ohne wenigstens teilweise vorhandene seitliche Abdeckung durch die Zwischensohle zwischen der Laufsohle und der Brandsohle angeordnet ist, wird darüber hinaus bei Verwendung einer Zwischensohle mit antistatischen Eigenschaften vorteilhaft der antistatische Charakter der Sohle insgesamt gewahrt, selbst wenn das eTPU oder das eTPE geringe antistatische Eigenschaften aufweisen sollten. Darüber hinaus wird durch die im Seitenbereich vorliegende Abdeckung durch die Zwischensohle die Integrität der Schuhsohle bei in Seitenrichtung auftretenden Kräften verstärkt. Derartige Kräfte treten beispielsweise auf, wenn ein Träger eines Schuhs mit einer entsprechenden Sohle eine Kurve läuft oder sich seitlich abstemmt, etwa um eine schwere Last seitlich zu verschieben. An Stellen, an denen die Zwischensohle das Dämpfungsmaterial abdeckt, liegt die Zwischensohle insbesondere direkt am Dämpfungsmaterial an. Vorzugsweise sind wenigstens 40%, insbesondere wenigstens 50%, wie beispielsweise wenigstens 60 % oder wenigstens 70 % einer Seitenfläche des Dämpfungsmaterials, vorzugsweise jeweils beider Seitenflächen des Dämpfungsmaterials, durch die Zwischensohle abgedeckt. Alternativ oder zusätzlich ist vorzugsweise ist die wenigstens teilweise vorhandene seitliche Abdeckung des Dämpfungsmaterials durch die Zwischensohle so ausgestaltet, dass bei Seitenaufsicht auf eine Sohle, bei welcher die Zwischensohle mittels eines oder mehrerer Durchbrüche einen Blick auf dahinterliegende Dämpfungsmaterial zulässt, die Fläche der Durchbrüche bezogen auf die Gesamtfläche, zusammengesetzt aus der Fläche der Zwischensohle und der Fläche der Durchbrüche, maximal 40 %, vorzugsweise maximal 30 % der aus der Fläche der Zwischensohle und der Fläche der Durchbrüche zusammengesetzten Gesamtfläche ausmacht. Dadurch ergibt sich durch die Zwischensohle vorteilhaft ein sehr guter Schutz vor Beschädigungen des Dämpfungsmaterials, insbesondere mechanischen Beschädigungen, jedoch gegebenenfalls auch beispielsweise Beschädigungen durch Chemikalien, wobei gleichzeitig eine gute Gewichtsersparnis gegeben ist. Die Festigkeit der einzelnen Materialien für die Laufsohle, die Zwischensohle und das Dämpfungsmaterial, beispielsweise die Druckfestigkeit, Torsionsfestigkeit und/oder Kompressionsfestigkeit, nimmt vorzugsweise von der Laufsohle über die Zwischensohle zum Dämpfungsmaterial hin ab. Vorteilhaft kann dadurch die Laufsohle als Hauptschnittstelle zur Außenwelt eine maximale Schutzfunktion entfalten, während das Dämpfungsmaterial zu einer Entlastung des Fußes und/oder zu einer Rückgewinnung aufgewendete Energie beiträgt.

Die teilweise vorhandene seitliche Abdeckung des Dämpfungsmaterials durch die Zwischensohle im Seitenbereich der Sohle ist als ein Bereich zwischen einem Durchbruch der Zwischensohle im hinteren Fersen-Seitenbereich und einem Durchbruch im vorderen Fersen-Seitenbereich ausgestaltet, liegt also etwa im mittleren Fersen-Seitenbereich. Unter dem hinteren, mittleren bzw. vorderen Fersen-Seitenbereich wird derjenige Teil der Seite der Sohle verstanden, der bei Draufsicht auf die Seite der Sohle ungefähr unter dem hinteren, mittleren bzw. vorderen Teil einer Ferse eines auf die Sohle aufgesetzten Fußes zu liegen kommt. Der vordere Fersen-Seitenbereich geht dann in den Längsgewölbe-Seitenbereich über, wobei es klar ist, dass hier keine absoluten Grenzen angegeben werden, sondern fließende Übergänge herrschen und je nach Schuh Variationen bezüglich der Ausdehnungen der einzelnen Bereiche und der relativen Größe zueinander auftreten können.
Gemäß einer Ausführungsform deckt die Brandsohle das Dämpfungsmaterial nach oben hin, also in Richtung eines Fußes, wenigstens in einem Längsgewölbe-Bereich und/oder in einem Zehenbereich, ab. Unter dem Längsgewölbe-Bereich bzw. dem Zehenbereich wird derjenige Bereich der Sohle bzw. der Brandsohle verstanden, über dem nach Einbau der Sohle in einen Schuh das Längsgewölbe des Fußes oder zumindest dessen Hauptanteil bzw. die Zehen eines Trägers des Schuhs zu liegen kämen. Die Abdeckung im Längsgewölbe-Bereich liegt an einer Stelle vor, an welcher kein oder im Wesentlichen kein Kontakt zwischen der Fußsohle des Trägers eines Schuhs und der Brandsohle vorliegt. Analog werden im Zehenbereich nur geringe Kräfte übertragen, wobei diese insbesondere nur während des Abstoßens des Fußes beim Gehen auftreten. Folglich ist in diesen Bereich keine ausgeprägte Dämpfung des vom Fuß ausgeübten Drucks durch das Dämpfungsmaterial erforderlich. Da die Brandsohle ein zentrales Strukturelement des Schuhs darstellt, welches die Sohle mit dem Schaft verbindet, kann eine in diesem Bereich oder möglichst in diesen beiden Bereichen vollständig ausgebildete Brandsohle ihre Funktion der Aufrechterhaltung der Integrität des Schuhs ungehindert ausüben.

Gemäß einer Ausführungsform weist die Brandsohle einen ersten Brandsohlen-Durchbruch in einem Fersenbereich und/oder einen zweiten Brandsohlen-Durchbruch in einem Vorderfußballen-Bereich auf und deckt in diesem Bereich bzw. in diesen Bereichen das Dämpfungsmaterial nicht ab. Unter dem Fersenbereich bzw. dem Vorderfußballen-Bereich der Brandsohle wird derjenige Teil der Brandsohle verstanden, über den beim Einbauen der Brandsohle in einen Schuh die Ferse bzw. der Vorderfußballen des Fußes eines Trägers des Schuhs zu liegen käme. Die Ferse ist derjenige Bereich des Fußes, in den beim Stehen ein Teil der auf einen Fuß wirkenden Gewichtskraft auf den Untergrund abgeleitet wird. Beim Gehen oder Laufen ist die Ferse der erste Teil des Fußes, der - indirekt über den Schuh - mit dem Untergrund in Kontakt kommt, sodass kurzzeitig die gesamte Gewichtskraft des Körpers über diesen Teil abgeleitet wird. Analog wird beim Stehen ein Teil der auf einen Fuß wirkenden Gewichtskraft über den Vorderfußballen abgeleitet, und während des Gehens beim Abstoßen des Fußes vom Grund die gesamte Gewichtskraft des Körpers. Dementsprechend ist es besonders vorteilhaft, in einem oder insbesondere in beiden dieser Bereiche einen Durchbruch in der Brandsohle vorzusehen, da die Dämpfungseigenschaften des Dämpfungsmaterials noch nicht einmal durch eine zwischengeschaltete Brandsohle abgeschwächt werden und dadurch die Ferse bzw. der Vorderfußballen eines Fußes optimal durch das Dämpfungsmaterial vor Belastungen geschützt wird. Vorzugsweise erstreckt sich das Dämpfungsmaterial in den ersten und/oder den zweiten Brandsohlen-Durchbruch und schließt zum Fuß hin - oder zu einer gegebenenfalls zwischen der Brandsohle und dem Fuß liegenden Einlage - in der gleichen Ebene ab wie die Brandsohle. Dadurch werden einerseits keine Unebenheiten in der Ebene der Brandsohle verursacht, die bei einem direkt (oder weitere Zwischenmaterialien wie etwa Einlagesohlen indirekt) auf die Brandsohle aufgesetzten Fuß ein unangenehmes Tragegefühl verursachen könnten. Weiterhin verhindert das sich in den ersten und/oder zweiten Brandsohlen-Durchbruch erstreckende Dämpfungsmaterial ein Verrutschen der Brandsohle gegenüber dem Dämpfungsmaterial und fixiert diese somit.

In einer besonderen Ausführungsform umgibt die Zwischensohle das Dämpfungsmaterial käfigartig, wobei an einer oder beiden Seiten der Zwischensohle Zwischensohlen-Durchbrüche im hinteren Fersen-Seitenbereich und/oder im vorderen Fersen-Seitenbereich vorliegen. Weiterhin deckt die Zwischensohle die Oberseite des Dämpfungsmaterials im Zehenbereich ab. Die restliche Oberseite des Dämpfungsmaterials ist nicht abgedeckt, um an Stellen, an denen das Dämpfungsmaterial über einen ersten Brandsohlen-Durchbruch in einem Fersenbereich und/oder über einen zweiten Brandsohlen-Durchbruch in einem Vorderfußballen-Bereich frei zugänglich sein soll, auch keine Abdeckung durch die Zwischensohle zu schaffen. In einem Bereich, welcher unter dem Längsgewölbe-Bereich einer dem Dämpfungsmaterial zuzuordnenden Brandsohle zu liegen kommt, kann die Oberseite des Dämpfungsmaterials vollständig oder teilweise von der Zwischensohle bedeckt sein.

Beispielsweise ist das Dämpfungsmaterial als zusammenhängendes Formteil ausgebildet und weist an seiner Oberseite eine erste plateauförmige Erhebung auf, die darauf abgestimmt ist, sich durch den ersten Brandsohlen-Durchbruch zu erstrecken und mit der Ebene der Brandsohle abzuschließen. Analog ist eine zweite plateauförmige Erhebung auf den zweiten Brandsohlen-Durchbruch abgestimmt. Eine erste seitliche Ausbuchtung und eine zweite seitliche Ausbuchtung, für die auf der gegenüberliegenden Seite vorzugsweise Entsprechungen vorliegen, sind vorgesehen, um sich zum Zwischensohlen-Durchbruch im hinteren Fersen-Seitenbereich bzw. zum Zwischensohlen-Durchbruch im vorderen Fersen-Seitenbereich hin zu erstrecken. Die erste seitliche Ausbuchtung und die zweite seitliche Ausbuchtung erstrecken sich vorzugsweise nicht vollständig durch die Zwischensohlen-Durchbrüche, schließen also nicht mit der gleichen Ebene ab wie die Zwischensohlen-Durchbrüche, sondern hinter dieser Ebene, sodass ein besserer Schutz des Dämpfungsmaterials vor Auswirkungen von außen, beispielsweise mechanischen oder chemischen Einflüssen gegeben ist.

Vorzugsweise ist der Bereich hinter der ersten plateauförmigen Erhebung und vor der zweiten plateauförmigen Erhebung noch wenigstens teilweise von Material der Zwischensohle bedeckt. Ebenso sind die Seiten des Dämpfungsmaterials mit Ausnahme der ersten seitlichen Ausbuchtung und der zweiten seitlichen Ausbuchtung sowie gegebenenfalls deren Entsprechungen, die sich an der gegenüberliegenden Seite des Dämpfungsmaterials befinden, von der Zwischensohle bedeckt. Die Zwischensohle erstreckt sich vorzugsweise über die gesamte Unterseite des Dämpfungsmaterials, wobei jedoch in Bereichen, in denen das Dämpfungsmaterial oberhalb der Laufsohle liegt, immer eine Zwischensohle zwischen dem Dämpfungsmaterial und der Laufsohle angeordnet ist. Das Dämpfungsmaterial ist somit käfigartig von der Zwischensohle eingeschlossen. Optional kann sich die Zwischensohle, zusätzlich zu den Bereichen hinter der ersten plateauförmigen Erhebung und vor der zweiten plateauförmigen Erhebung, auch noch ganz oder teilweise in weitere Bereiche der Oberseite des Dämpfungsmaterials erstrecken.

Gemäß einer Ausführungsform weist das Dämpfungsmaterial wenigstens eine der Eigenschaften aus, die ausgewählt sind unter einer Materialdichte, bestimmt gemäß der Norm ISO 845, im Bereich von 15-320 kg/Kubikmeter, und/oder einer Bruchdehnung im Bereich von 100 bis 200 %, insbesondere 100 bis 150 %, wie etwa 100 bis 150 %, und/oder einer Rücksprungshöhe von mehr als 35 %, gemessen nach der Norm DIN EN ISO 8307, insbesondere eine Rücksprungshöhe im Bereich von 40 bis 70 %, beispielsweise 50 bis 60 %, oder 52 bis 58 %, wie etwa 55 %. Durch eine Materialdichte in dem genannten Bereich wird vorteilhaft ein vergleichsweise leichtes Dämpfungsmaterial verwendet, welches nur gering zum Gesamtgewicht der Sohle und damit zu einem eine derartige Sohle aufweisenden Schuh beiträgt. Vorteilhaft lässt sich ein derartiger Schuh unter geringerer Ermüdung verwenden als ein Schuh mit einem höheren Gesamtgewicht. Bei Verwendung von eTPU für das Dämpfungsmaterial liegt ein bevorzugter Bereich bei 200-320 kg pro Kubikmeter, beispielsweise 240-300 kg/Kubikmeter, wie etwa 250 kg/Kubikmeter bis 270 kg/Kubikmeter, beispielsweise 260 kg/Kubikmeter. Bei Verwendung von eTPE für das Dämpfungsmaterial liegt ein bevorzugter Bereich bei 10 kg/Kubikmeter bis 120 kg/Kubikmeter, beispielsweise 15 kg/Kubikmeter bis 115 kg/Kubikmeter. Dämpfungsmaterial mit einer Bruchdehnung in dem genannten Bereich kann vorteilhaft für Schuhe verwendet werden, da bei deren normalem Gebrauch derartige Dehnungen nicht erreicht werden und somit ein Versagen des Dämpfungsmaterials durch Bruch nicht zu befürchten ist. Eine Rücksprunghöhe ab der genannten Untergrenze, und insbesondere in dem genannten Bereich, stellt besonders gut sicher, dass bei der Verwendung einer derartigen Sohle in einem Schuh der Schock beim Aufsetzen des Schuhs auf den Untergrund gut abgedämpft und die dabei in Form einer Kompression des Dämpfungsmaterials gespeicherte Energie beim Verlassen des Untergrunds effizient freigesetzt wird. Ein besonders gut diesen Erfordernissen entsprechendes Dämpfungsmaterial ist das vom Hersteller BASF SE (Ludwigshafen, Deutschland) unter der Bezeichnung Infinergy® vertriebene eTPU, das in verschiedenen Variationen, beispielsweise in verschiedenen Materialdichten angeboten wird, oder vergleichbare eTPUs, oder das von der Zotefoams Plc. (Croydon, Vereinigtes Königreich) ebenfalls in verschiedenen Materialdichten unter der Bezeichnung Plastazote® angebotene eTPE, oder vergleichbare eTPEs.

Gemäß einer Weiterbildung umfasst das Dämpfungsmaterial ein eTPU, dessen Materialdichte im Bereich von 240-300 kg/Kubikmeter liegt. Ein derartiges eTPU weist vorteilhaft einen geringen Druckverformungsrest nach Entspannung auf, und damit eine dauerhafte Formbeständigkeit auch nach wiederholten Einsätzen unter hoher Gewichtsbelastung, die insbesondere bei Sicherheitsschuhen zu erwarten sind. Gemäß einer noch anderen Weiterbildung wird ein eTPU verwendet, dessen Materialdichte wenigstens 280 kg/Kubikmeter beträgt.

In einer Ausführungsform umfasst die Sohle eine Laufsohle mit einer Dichte im Bereich von 900-1100 Kilogramm pro Kubikmeter, beispielsweise ca. 1000 kg pro Kubikmeter, eine Zwischensohle mit einer Dichte von 350-450 kg/Kubikmeter, beispielsweise ca. 400 kg/Kubikmeter, und einem Dämpfungsmaterial mit einer Dichte von 250-270 kg/Kubikmeter, beispielsweise ca. 260 kg/Kubikmeter. Dadurch wird eine Sohle bereitgestellt, die aus einem Material mit drei Dichten aufgebaut ist. Vorteilhaft umfasst dabei die Laufsohle das Material mit der höchsten Dichte, stellt vorzugsweise ein porenfreies Material dar, und ist dadurch geeignet ausgebildet, um gegen mechanische Beschädigungen, die vom Laufuntergrund verursacht werden können, resistent zu sein. Das Material der Zwischensohle weist im Vergleich dazu eine mittlere Dichte auf, umfasst vorzugsweise ein porenhaltiges Material, entweder offenzellig oder geschlossenzellig, welches vorteilhaft zur Gewichtsreduktion beiträgt und erste Dämpfungseigenschaften bereitstellt. Das Dämpfungsmaterial mit der geringsten Dichte trägt erheblich zur Gewichtsreduktion bei und stellt überlegene Dämpfungseigenschaften bereit.

Wie bereits erwähnt, deckt gemäß einer Ausführungsform die Zwischensohle in wenigstens einem Teil eines Seitenbereichs der Sohle mittels eines Zwischensohlen-Durchbruchs im hinteren Fersen-Seitenbereich und/oder mittels eines Zwischensohlen-Durchbruchs im vorderen Fersen-Seitenbereich das Dämpfungsmaterial nicht ab. Unter dem Fersen-Seitenbereich wird derjenige Bereich an der Seite der Sohle verstanden, der unter der Ferse eines auf die Sohle aufgesetzten Fußes zu liegen kommt. Eine weitere beispielhafte Stelle für einen entsprechenden Durchbruch im Seitenbereich ist eine Stelle unterhalb des Vorderfußballen-Bereichs der Brandsohle. Diese Durchbrüche ermöglichen in der Seitendraufsicht auf die Sohle einen direkten Blick auf das Dämpfungsmaterial. Der oder die Zwischensohlen-Durchbrüche tragen vorteilhaft zur Gewichtsreduzierung der Sohle bei, wobei das die Durchbrüche umgebende Material der Zwischensohle nach wie vor für insbesondere einen mechanischen Schutz des Dämpfungsmaterials sorgt. Bei einer Druckbelastung wird jedoch das Dämpfungsmaterial im Bereich des Zwischensohlen-Durchbruchs nicht durch das Material der Zwischensohle eingeengt und kann damit Druckspitzen insgesamt weicher abdämpfen. Der Zwischensohlen-Durchbruch im hinteren Fersen-Seitenbereich und/oder der Zwischensohlen-Durchbruch im vorderen Fersen-Seitenbereich können auf einer Seite der Sohle vorliegen, beispielsweise auf der Innenseite oder der Außenseite, welche dem Innenrist oder dem Außenrist eines für die Sohle vorgesehenen Schuhs entspricht, oder auf beiden Seiten.

Die Aufgabe ist gemäß einem zweiten Aspekt gelöst durch einen Sicherheitsschuh, der eine Sohle gemäß dem ersten Aspekt sowie einen mit der Sohle verbundenen Schuhschaft umfasst. Ein derartiger Sicherheitsschuh weist im Vergleich mit einem herkömmlichen Schuh vorteilhaft die vorstehend beschriebenen Eigenschaften auf, die durch die erfindungsgemäße Sohle verliehen werden.

Der Sicherheitsschuh weist im Bereich der Vorderkappe des Schuhschafts eine Schutzkappe auf. Eine derartige Schutzkappe ist insbesondere vorteilhaft für Sicherheitsschuhe und schützt den Zehenbereich des in dem Schuh befindlichen Fußes vor Verletzungen durch Verformung des Schuhs aufgrund von Krafteinwirkung. Beispiele für Schutzkappen sind solche aus Metall einschließlich Metalllegierungen, weiterhin steife Kunststoffe oder Kompositmaterialien, wie beispielsweise kunststoff- oder harzverstärkte Faser- oder Textilmaterialien.

Gemäß einer Ausführungsform des Sicherheitsschuhs ist die Brandsohle mit der Zwischensohle über einen sich zwischen die Brandsohle und die Zwischensohle erstreckenden Anteil des Schuhschafts indirekt verbunden. Durch diesen Aufbau wird der Zusammenhalt zwischen Schuhschaft und Sohle vorteilhaft verstärkt, und der Sicherheitsschuh kann in höherem Maße verbogen oder verbunden werden, ohne dass eine Beeinträchtigung der strukturellen Einheit zwischen Schuhschaft und Sohle zu befürchten ist. Beispielsweise kann mittels eines fachbekannten Zwickeinschlags Material des Schuhschafts unter die Brandsohle geführt werden und dadurch zwischen der Brandsohle und der Zwischensohle zu liegen kommen. Gemäß einer besonderen Weiterbildung erstrecken sich der oder die Anteile des Schuhschafts nicht in Bereiche, in denen bereits eine möglichst gute Dämpfung von Stößen oder Druckbelastungen durch das Dämpfungsmaterial gewünscht ist. In diesen Bereichen liegt demzufolge die Brandsohle direkt am Dämpfungsmaterial an. Beispiele für derartige Bereiche sind solche, die benachbart sind zu Durchbrüchen der Brandsohle, in denen das Dämpfungsmaterial nicht abgedeckt ist.

Die Aufgabe ist in einem dritten Aspekt gelöst durch ein Verfahren zur Herstellung einer Sohle wie vorstehend beschrieben. Das Verfahren umfasst ein Bereitstellen der Laufsohle in einem Formennest eines Besohlungswerkzeugs, ein Positionieren des Dämpfungsmaterials gegenüber der Laufsohle, ein Einspritzen der Zwischensohle in das Formennest, sowie ein Verbinden mit einer Brandsohle. Das Bereitstellen der Laufsohle in dem Formennest erfolgt gemäß einer Weiterbildung durch Einspritzen des Laufsohlenmaterials in plastischem Zustand und Aushärten durch Abkühlung, gemäß einer alternativen Weiterbildung durch Einsetzen eines bereits vorgefertigten, abgekühlten Laufsohlenmaterials. Das Verbinden mit einer Brandsohle erfolgt gemäß einer Weiterbildung durch Verbinden mit einer bereits in einen Schuhschaft integrierten Brandsohle. Gemäß einer anderen Weiterbildung erfolgt das Verbinden mit einer isolierten Brandsohle, wobei die dadurch hergestellte Sohle gegebenenfalls später in einem weiteren Verarbeitungsschritt mit einem Schuhschaft unter Erhalt eines Sicherheitsschuhs verbunden wird, beispielsweise vernäht, verklebt und/oder verschmolzen wird. An Abschnitten, an denen die Innenfläche der Laufsohle mit der Zwischensohle verbunden sein soll, wird das Dämpfungsmaterial kontaktfrei gegenüber der Laufsohle positioniert. Beim Einspritzen der Zwischensohle kann diese somit zwischen die Laufsohle und das Dämpfungsmaterial eintreten. Das Einspritzen der Zwischensohle erfolgt vorzugsweise in Form des Einspritzens von Reaktionspartnern zur Bildung eines Polyurethans, also Diolen und/oder Polyolen sowie Diisocyanaten und, oder Polyisocyanaten, die im Formennest unter Ausbildung des Polyurethans der Zwischensohle miteinander reagieren.

Die Aufgabe ist in einem vierten Aspekt gelöst durch ein alternatives Verfahren zur Herstellung eines Sicherheitsschuhs. Dieses Verfahren umfasst ein Bereitstellen eines Schuhschafts mit damit verbundener Brandsohle auf einem Leisten, ein Fixieren des Dämpfungsmaterials auf der Brandsohle, ein Bereitstellen der Laufsohle in einem Formennest eines Besohlungswerkzeugs, ein Positionieren des Leistens mit dem Schuhschaft und der Brandsohle gegenüber der Laufsohle im Formennest, ein Einspritzen der Zwischensohle in das Formennest und ein Aushärten, und ein Entformen und Entfernen des Leistens. Das Bereitstellen der Laufsohle in dem Formennest erfolgt, wie schon in dem vorstehenden Aspekt beschrieben, gemäß einer Weiterbildung durch Einspritzen des Laufsohlenmaterials in plastischem Zustand und Aushärten durch Abkühlung, gemäß einer alternativen Weiterbildung durch Einsetzen eines bereits vorgefertigten, abgekühlten Laufsohlematerials. Vorzugsweise erfolgt das Bereitstellen des Schuhschafts mit damit verbundener Brandsohle in Form eines Schuhschafts, bei dem ein Teil des Schaftmaterials mittels eines Zwickeinschlags mit der Unterseite der Brandsohle verbunden ist, beispielsweise verklebt, verschmolzen und/oder vernäht ist. Das Fixieren des Dämpfungsmaterials auf der Brandsohle erfolgt beispielsweise ebenfalls über Verkleben, Verschmelzen und/oder Vernähen, gemäß einer besonderen Weiterbildung über Verkleben, welches vorteilhaft eine einfache und schnelle, gegebenenfalls auch automatisierbare Art des Verbindens ermöglicht. Vorzugsweise kommt dabei ein Schmelzklebstoff zum Einsatz, insbesondere ein Schmelzklebstoff, dessen Schmelzpunkt deutlich über den Höchsttemperaturen liegt, bei denen der herzustellende Schuh eingesetzt wird. Gemäß einer besonderen Weiterbildung werden vor dem Fixieren des Dämpfungsmaterials auf der Brandsohle Durchbrüche an Bereichen der Brandsohle bereitgestellt, in denen diese das Dämpfungsmaterial nicht abdecken soll. Beispiele für derartige Bereiche sind Durchbrüche in einem Fersenbereich und/oder in einem Vorderfußballen-Bereich. An Abschnitten, an denen die Innenfläche der Laufsohle mit der Zwischensohle abschnittsweise verbunden sein soll, wird das Dämpfungsmaterial kontaktfrei gegenüber der Laufsohle positioniert. Beim Einspritzen der Zwischensohle kann diese somit zwischen die Laufsohle und das Dämpfungsmaterial eintreten. Hinsichtlich des Einspritzens der Zwischensohle wird auch auf die im Rahmen des dritten Aspekts gemachten Erklärungen Bezug genommen.

Gemäß einer Weiterbildung erfolgt das Verbinden der Sohle mit dem Schuhschaft über ein Vernähen und/oder ein Verkleben, wobei auf die vorstehenden Ausführungen verwiesen wird.

Die Aufgabe ist in einem fünften Aspekt gelöst durch ein alternatives Verfahren zur Herstellung eines Sicherheitsschuhs wie vorstehend beschrieben. Das alternative Verfahren umfasst ein Bereitstellen eines Schuhschafts mit damit verbundener Brandsohle auf einem Leisten, weiterhin ein Fixieren des Dämpfungsmaterials auf der Brandsohle, weiterhin ein Bereitstellen der Laufsohle in einem Formennest eines Besohlungswerkzeugs, weiterhin ein Positionieren des Leistens mit dem Schuhschaft und der Brandsohle gegenüber der Laufsohle im Formennest, weiterhin ein Einspritzen der Zwischensohle in das Formennest und Aushärten, und weiterhin ein Entformen und Entfernen des Leistens. An Abschnitten, an denen die Innenfläche der Laufsohle mit der Zwischensohle verbunden sein soll, wird das Dämpfungsmaterial kontaktfrei gegenüber der Laufsohle positioniert. Beim Einspritzen der Zwischensohle kann diese somit zwischen die Laufsohle und das Dämpfungsmaterial eintreten. An Abschnitten, an denen keine Zwischensohle zwischen dem Dämpfungsmaterial und der Laufsohle angeordnet sein soll, erfolgt dementsprechend ein Bereitstellen der Laufsohle in einem Formennest eines Besohlungswerkzeugs und ein Positionieren des Dämpfungsmaterials unter Kontakt mit der Laufsohle und ein anschließendes Einspritzen der Zwischensohle. Hinsichtlich möglicher Details zum Einspritzen der Zwischensohle wird wiederum auf im Rahmen des dritten Aspekts gemachte Erklärungen Bezug genommen.

Das Bereitstellen der Laufsohle in einem Formennest erfolgt wie schon in dem vorstehenden Aspekt beschrieben gemäß einer Weiterbildung durch Einspritzen des Laufsohlenmaterials in plastischem Zustand und Aushärten durch Abkühlung, gemäß einer alternativen Weiterbildung durch Einsetzen eines bereits vorgefertigten, abgekühlten Laufsohlematerials. Das Fixieren des Dämpfungsmaterials auf der Brandsohle erfolgt gemäß einer Weiterbildung mittels Verkleben, Verschmelzen und/oder Vernähen, gemäß einer besonderen Weiterbildung über Verkleben, wobei auf die vorstehenden Ausführungen analog verwiesen wird.

Gemäß einer Ausführungsform des Verfahrens wird die mit dem Schuhschaft verbundene Brandsohle mit einem ersten Brandsohlen-Durchbruch in einem Fersenbereich, also einem Bereich, welcher der Fersenunterseite eines Fußes entspricht, und/oder ein zweiter Brandsohlen-Durchbruch in einem Vorderfußballen-Bereich, also dem Bereich, der dem Vorderfußballen eines Fußes entspricht, bereitgestellt. Diese Durchbrüche sorgen dafür, dass der Kontakt zwischen der Fersenunterseite eines Fußes und dem Dämpfungsmaterial bzw. zwischen dem Vorderfußballen eines Fußes und dem Dämpfungsmaterial nicht durch eine zwischengelagerte Brandsohle gestört wird. Folglich kann eine Fußbewegung in Richtung der Laufsohle durch das Dämpfungsmaterial optimal gedämpft werden. Dessen ungeachtet ist die Brandsohle, die ein zentrales Strukturelement eines Schuhs darstellt, da damit die Sohle mit dem Schuhschaft verbunden wird, dennoch so weitgehend vorhanden, dass sie ihre strukturelle Funktion wahrnehmen kann.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine Seitendraufsicht auf eine Sohle mit Laufsohle, Dämpfungsmaterial, Zwischensohle und Brandsohle in zusammengesetztem Zustand,
- Fig. 2: eine Seitendraufsicht auf eine Laufsohle, ein Dämpfungsmaterial und eine Zwischensohle in getrenntem Zustand,
- Fig. 3: die Sohle aus Fig. 1 mit zusätzlichem Schuhschaft,
- Fig. 4: eine abgewandelte Sohle mit zusätzlichem Schuhschaft,
- Fig. 5: eine schematische räumliche Darstellung einer Sohle mit Schnitten in mehreren Ebenen,
- Fig. 6: eine schematische räumliche Darstellung eines Dämpfungsmaterials,
- Fig. 7: eine schematische räumliche Darstellung eines Dämpfungsmaterials zusammen mit einer Zwischensohle,
- Fig. 8: eine schematische räumliche Darstellung eines Dämpfungsmaterials zusammen mit einer Zwischensohle und Laufsohle,
- Fig. 9: eine schematische räumliche Darstellung eines Dämpfungsmaterials zusammen mit einer Zwischensohle, Laufsohle und Brandsohle,
- Fig. 10: eine schematische räumliche Darstellung eines Sicherheitsschuhs,
- Fig. 11: eine schematische räumliche Darstellung eines Sicherheitsschuhs mit angedeuteter Schutzkappe.

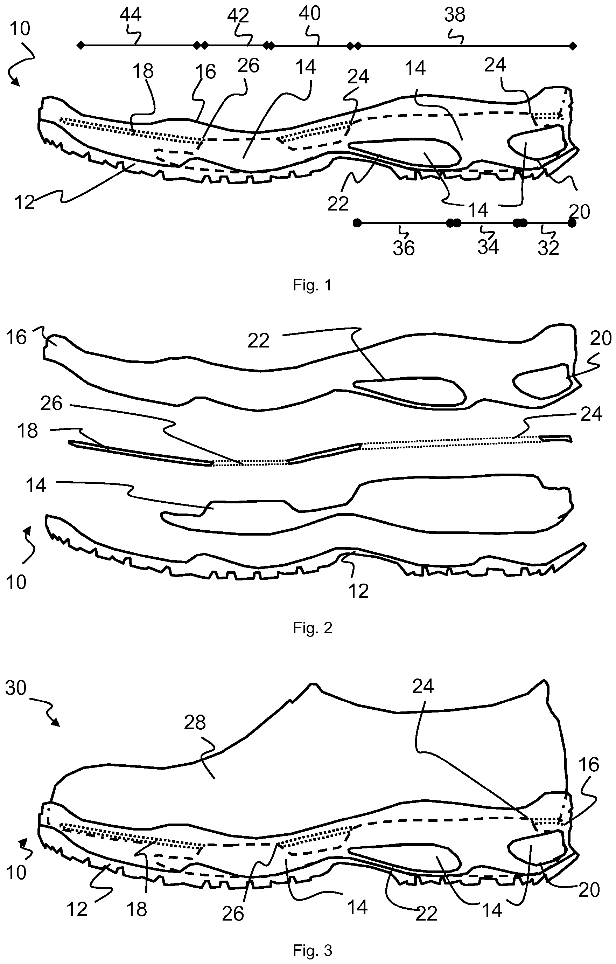

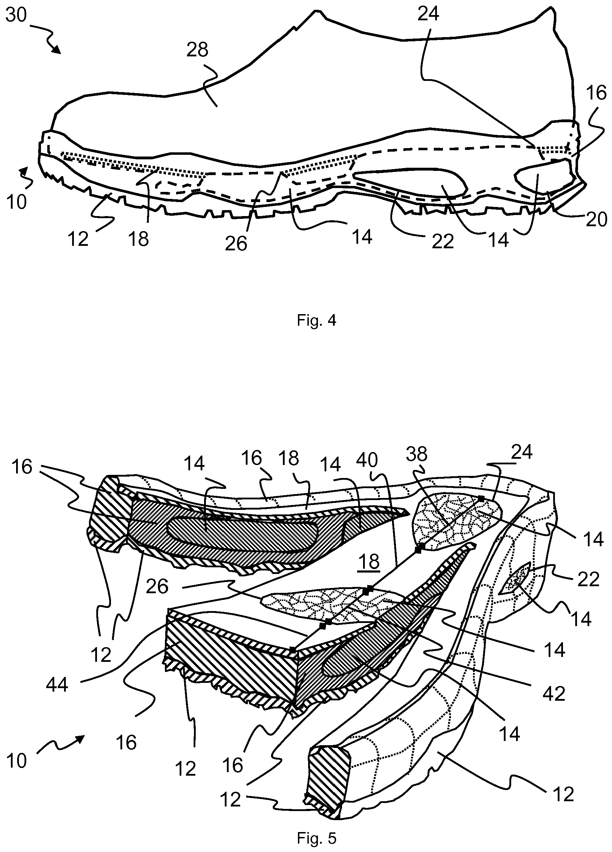

**Figur 1** zeigt eine schematische Seitendraufsicht auf eine Sohle 10 mit Laufsohle 12, Dämpfungsmaterial 14, Zwischensohle 16 und Brandsohle 18 in zusammengesetztem Zustand. In der Seitendraufsicht ungehindert sichtbar sind die Laufsohle 12 und die Zwischensohle 16 mit deren zur Seite weisenden Anteilen. Die Brandsohle 18 befindet sich in Sichtrichtung hinter der Zwischensohle 16 und ist aus diesem Grund mittels einer Punktlinie dargestellt. Das Dämpfungsmaterial 14 befindet sich ebenfalls in Sichtrichtung hinter der Zwischensohle 16 bzw. hinter der Laufsohle 12 und ist daher mit einer Strichlinie dargestellt. Lediglich im Bereich eines Zwischensohlen-Durchbruchs 20 im hinteren Fersen-Seitenbereich 32 der Sohle 10 und eines Zwischensohlen-Durchbruchs 22 im vorderen Fersen-Seitenbereich 36 im Seitenbereich der Sohle 10 ist in der Seitendraufsicht ein direkter Blick auf das Dämpfungsmaterial 14 möglich. Weiterhin weist die Zwischensohle 18 einen ersten Brandsohlen-Durchbruch 24 im Fersenbereich 38 der Sohle 10 sowie einen zweiten Brandsohlen-Durchbruch 26 im Vorderfußballen-Bereich 42 der Sohle 10 auf. Im Bereich dieser beiden Brandsohlen-Durchbrüche 24, 26 deckt die Brandsohle 18 das Dämpfungsmaterial 14 nach oben hin, also in Richtung eines Fußes, nicht ab. Die mit Endpunkten versehenen Linien am unteren Rand der Figur 1 dienen als Orientierungshilfe für die verschiedenen Bereiche der Sohle 10 in der Seitendraufsicht und geben eine Vorstellung von der Ausdehnung des hinteren Fersen-Seitenbereichs 32, des mittleren Fersen-Seitenbereich 34 und des vorderen Fersen-Seitenbereich 36. Die mit Endrauten versehenen Linien am oberen Rand der Figur 1 dienen als Orientierungshilfe für die diese Figur nicht gezeigte Draufsicht (die jedoch in der Figur 4 ermöglicht wird) auf die Oberfläche der Sohle 10 und geben eine Vorstellung von der Ausdehnung des Fersenbereichs 38, auf den die Ferse eines Fußes auf die Sohle 10 aufsetzen würde, des Längsgewölbe-Bereichs 40, über dem das Längsgewölbe eines Fußes sich befinden würde, des Vorderfußballen-Bereichs 42, auf dem der Vorderfußballen eines Fußes aufsetzen würde, und des Zehenbereichs 44, über den sich die Zehen eines Fußes erstrecken würden bzw. auf dem die Zehen eines Fußes aufsetzen würden.

**Figur 2** zeigt der besseren Übersicht halber die Laufsohle 12, das Dämpfungsmaterial 14, die Zwischensohle 16 mit deren Zwischensohlen-Durchbruch 20 im hinteren Fersen-Seitenbereich und deren Zwischensohlen-Durchbruch 22 im vorderen Fersen-Seitenbereich, und weiterhin die Brandsohle 18 mit deren erstem Brandsohlen-Durchbruch 24 und deren zweitem Brandsohlen-Durchbruch 26 der Sohle 10 als schematische Seitendraufsicht in getrennter Darstellung. In der Seitendraufsicht erscheint die Brandsohle 18 geschlossen, die Position des hinter der Bildebene liegenden ersten Brandsohlen-Durchbruchs 24 und des zweiten Brandsohlen-Durchbruchs 26 bis zur Veranschaulichung mit Punktlinien dargestellt. Der Seitenbereich der Zwischensohle 16 auf in einem Bereich mit einem Abstand zwischen dem Fersenende und dem Zehenende, der in etwa dem Abstand des zweiten Brandsohlen-Durchbruchs 26 vom Fersenende und dem Zehenende entspricht, ist ein Beispiel für eine weitere Stelle im Seitenbereich der Zwischensohle 16, an der ein Durchbruch in der Zwischensohle gesetzt werden könnte.

**Figur 3** zeigt in einer schematischen Seitendraufsicht einen Sicherheitsschuh 30, der eine Sohle 10 wie in den vorherigen Figuren 1 und 2 gezeigt, umfasst. Wiederum dargestellt sind die Laufsohle 12, das Dämpfungsmaterial 14, die Zwischensohle 16 mit dem Zwischensohlen-Durchbruch 20 im hinteren Fersen-Seitenbereich und dem Zwischensohlen-Durchbruch 22 im vorderen Fersen-Seitenbereich, die Brandsohle 18 mit dem ersten Brandsohlen-Durchbruch 24 und dem zweiten Brandsohlen-Durchbruch 26, wobei für das Dämpfungsmaterial 14 und die Brandsohle 18 wiederum Strichlinien bzw. Punktlinien verwendet werden, da diese in der Seitendraufsicht hinter der Zwischensohle 16 angeordnet sind. Die Sohle 10 ist nun mit einem Schuhschaft 28 verbunden, wobei nur stellvertretend für den Zehenbereich durch eine Strichpunktlinie angedeutet ist, dass sich dessen Material unter die Brandsohle 18 erstreckt und mit dieser über einen Zwickeinschlag verbunden ist.

Die Figuren 1 bis 3 zeigen eine Ausführungsform, bei der das Dämpfungsmaterial 14 direkt an der Laufsohle 12 aufliegt oder nur durch eine sehr dünne Schicht der Zwischensohle 16 von der Laufsohle 12 getrennt ist.

**Figur 4** zeigt im Wesentlichen die gleiche Ausführungsform wie bei Figur 3, wobei jedoch nun deutlich erkennbar das Leitungsmaterial 14 durch die Zwischensohle 16 von der Laufsohle 12 getrennt ist.

**Figur 5** zeigt ebenfalls eine Ausführungsform, bei dem zwischen dem Dämpfungsmaterial 14 und der Laufsohle 12 Material der Zwischensohle 16 angeordnet ist. Figur 4 stellt eine räumliche schematische Darstellung dar, wobei die gezeigte Sohle 10 entlang zweier Schnittebenen von der Ferse bis zum Zehenbereich der Sohle 10 geschnitten ist, weiterhin der Zehenbereich der Sohle abgeschnitten ist und die entstehenden Fragmente in verschiedenen Ebenen aufgespreizt sind, um den inneren Aufbau besser zu veranschaulichen. An die Laufsohle 12 schließt sich nach oben hin die Zwischensohle 16 an, welche die Laufsohle 12 von dem Dämpfungsmaterial 14 trennt. Die Zwischensohle 16 befindet sich zwischen der Laufsohle 12 und der Brandsohle 18. Das Dämpfungsmaterial 14 ist entweder durch die Zwischensohle 16 von der Brandsohle 18 getrennt oder liegt in einigen Bereichen direkt an der Brandsohle 18 an. Im Bereich des ersten Brandsohlen-Durchbruchs 24 und des zweiten Brandsohlen-Durchbruchs 26 wird das Dämpfungsmaterial 14 nicht von der Brandsohle abgedeckt. Weiterhin zu erkennen ist ein zweiter Zwischensohlen-Durchbruch 22, der ebenfalls einen freien Blick auf das dahinterliegende Dämpfungsmaterial 14 zulässt. In der Figur 4 dargestellt sind weiterhin die mit Endrauten versehenen Linien als Orientierungshilfe für die Bereiche der Sohle 10 in Draufsicht, die mittels der hier gezeigten Schrägaufsicht zugänglich sind. Dargestellt sind der Fersenbereich 38, der Längsgewölbe-Bereich 40, der Vorderfußballen-Bereich 42 und der Zehenbereich 44, wobei letzterer aufgrund des in der Schnittzeichnung abgeschnittenen Vorderteils des Schuhs 30 nicht vollständig gezeigt ist. Zur besseren Orientierung sind punktierte Hilfslinien für die Darstellung gekrümmter Oberflächen eingezeichnet. Die feinen Punktlinien im ersten Brandsohlen-Durchbruch 24, im zweiten Brandsohlen-Durchbruch 26 sowie im Zwischensohlen-Durchbruch 22 im vorderen Fersen-Bereich symbolisieren die Oberflächenmaserung des Dämpfungsmaterials 14, wobei Infinergy® zugrundegelegt wurde, dessen Oberfläche durch den ersten Brandsohlen-Durchbruch 24, den zweiten Brandsohlen-Durchbruch 26 und den Zwischensohlen-Durchbruch 22 im vorderen Fersen-Bereich zu sehen ist.

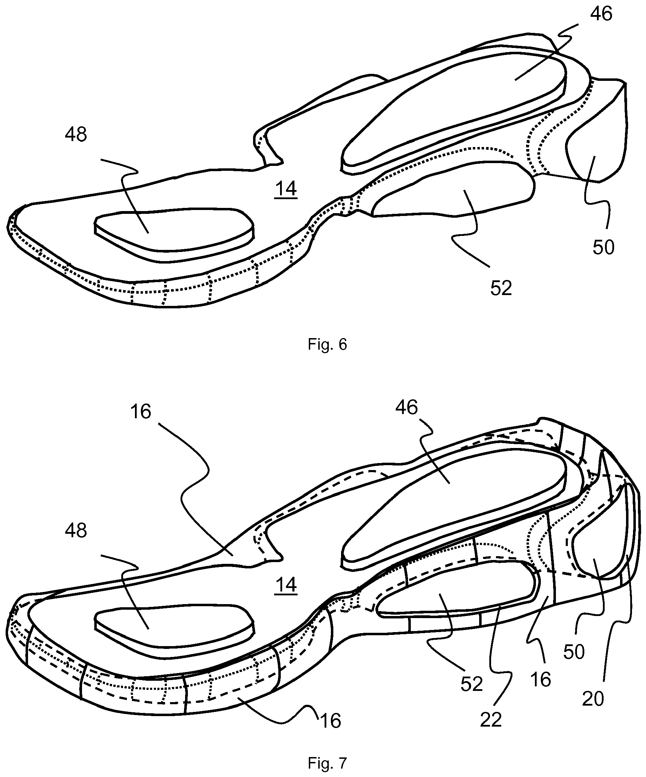

**Figur 6** zeigt eine schematische räumliche Darstellung eines Dämpfungsmaterials 14, das als zusammenhängendes Formteil ausgebildet ist. Eine erste plateauförmige Erhebung 46 ist darauf abgestimmt, sich durch den ersten Brandsohlen-Durchbruch 24 der Brandsohle 18 aus Figur 4, die in Figur 6 nicht gezeigt ist, zu erstrecken und mit der Ebene der Brandsohle 18 abzuschließen. Analog ist eine zweite plateauförmige Erhebung 48 auf den zweiten Brandsohlen-Durchbruch 26 abgestimmt. Eine erste seitliche Ausbuchtung 50 und eine zweite seitliche Ausbuchtung 52, für die auf der gegenüberliegenden Seite nicht weiter durch Bezugszeichen gekennzeichnete Entsprechungen vorliegen, sind vorgesehen, um sich zum Zwischensohlen-Durchbruch 20 im hinteren Fersen-Seitenbereich bzw. zum Zwischensohlen-Durchbruch 22 im vorderen Fersen-Seitenbereich zu erstrecken.

**Figur 7** zeigt eine besondere Ausführungsform des Dämpfungsmaterials 14 aus Figur 6 zusammen mit einer Zwischensohle 16. Die von der Zwischensohle 16 in der räumlichen Ansicht verdeckten Anteile des Dämpfungsmaterials 14 sind durch Strichlinien kenntlich gemacht, Konturenverläufe des Dämpfungsmaterials 14 mittels Punktlinien. Der Bereich hinter der ersten plateauförmigen Erhebung 46 und vor der zweiten plateauförmigen Erhebung 48 des Dämpfungsmaterials 14 ist vorzugsweise noch von der Zwischensohle 16 bedeckt, was in der Figur 7 auch so dargestellt ist. Ebenso sind die Seiten des Dämpfungsmaterials 14 mit Ausnahme der ersten seitlichen Ausbuchtung 50 und der zweiten seitlichen Ausbuchtung 52 sowie gegebenenfalls deren an der gegenüberliegenden Seite des Dämpfungsmaterials 14 liegenden Entsprechungen von der Zwischensohle 16 bedeckt. Die erste seitliche Ausbuchtung 50 und die zweite seitliche Ausbuchtung 52 sind aus diesem Grund durch den Zwischensohlen-Durchbruch im hinteren Fersen-Seitenbereich 20 bzw. den Zwischensohlen-Durchbruch im vorderen Fersen-Seitenbereich von außen sichtbar. Auf der gegenüberliegenden Seite liegen entsprechende Zwischensohlen-Durchbrüche für die entsprechenden Ausbuchtungen vor. Die Zwischensohle 16 erstreckt sich über die gesamte Unterseite des Dämpfungsmaterials 14. Das Dämpfungsmaterial 14 ist auf diese Weise käfigartig von der Zwischensohle 16 umgeben, mit Ausnahme der ersten plateauförmigen Erhebung 46, der zweiten plateauförmigen Erhebung 48, der ersten seitlichen Ausbuchtung 50, der zweiten seitlichen Ausbuchtung 52 und gegebenenfalls deren Entsprechungen auf der gegenüberliegenden Seite. Die Oberseite des Dämpfungsmaterials 14 kann, abgesehen von dem vorzugsweise von der Zwischensohle 16 bedeckten Bereich hinter der ersten plateauförmigen Erhebung 46 und vor der zweiten plateauförmigen Erhebung 48, nicht von der Zwischensohle 16 bedeckt sein, optional kann sich die Zwischensohle jedoch, zusätzlich zu den Bereichen hinter der ersten plateauförmigen Erhebung und vor der zweiten plateauförmigen Erhebung, auch noch ganz oder teilweise in weitere Bereiche der Oberseite des Dämpfungsmaterials erstrecken, beispielsweise in den Bereich auf der Oberseite des Dämpfungsmaterials 14 zwischen der ersten plateauförmigen Erhebung 46 und der zweiten plateauförmigen Erhebung 48, der ganz oder teilweise von der Zwischensohle 16 bedeckt sein kann oder frei von Zwischensohle 16 sein kann, oder kann sich beliebig nah an die erste plateauförmige Erhebung 46 und/oder die zweite plateauförmige Erhebung 48 annähern. Die erste seitliche Ausbuchtung 50, die zweite seitliche Ausbuchtung 52 und deren Entsprechungen auf der gegenüberliegenden Seite erstrecken sich vorzugsweise nicht bis zur äußeren Ebene des Zwischensohlen-Durchbruchs 20 im hinteren Fersen-Seitenbereich bzw. des Zwischensohlen-Durchbruchs 22 im vorderen Fersen-Seitenbereich, sondern bleiben dahinter zurück, wodurch ein besserer Schutz des Dämpfungsmaterials 14 vor Einwirkungen aus der Umwelt gegeben ist.

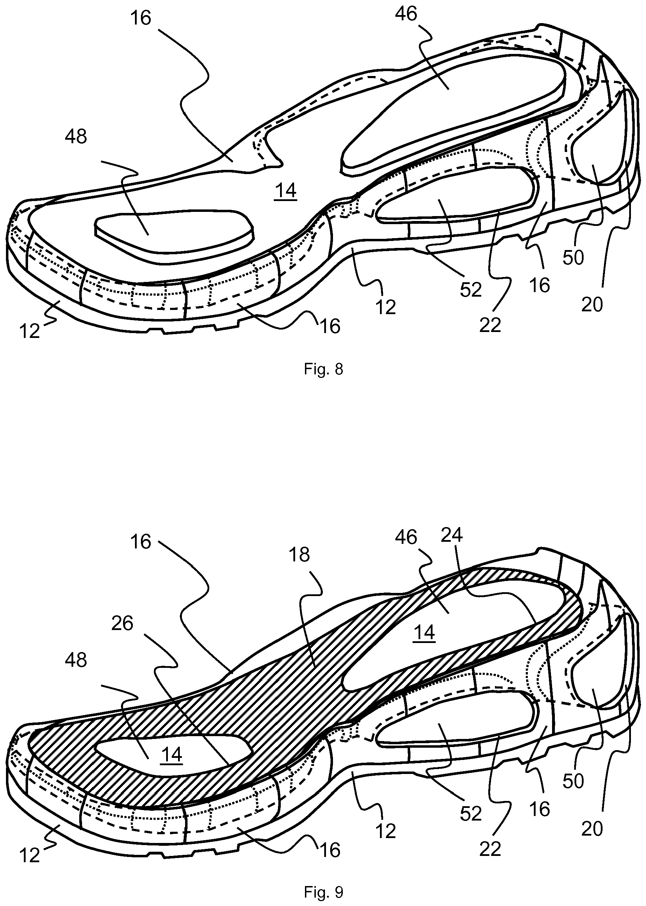

**Figur 8** zeigt die Anordnung aus Dämpfungsmaterial 14 und Zwischensohle 16 aus Figur 7, wobei sich zusätzlich an die Unterseite der Zwischensohle 16 eine Laufsohle 12 anschließt.

**Figur 9** zeigt die Anordnung aus Dämpfungsmaterial 14, Zwischensohle 16 und Laufsohle 12 aus Figur 8, wobei sich nun auf der Oberseite des Dämpfungsmaterials 14 eine Brandsohle 18 anschließt, die zur besseren Kenntlichmachung schraffiert dargestellt ist. Die erste plateauförmige Erhebung 46 des Dämpfungsmaterials 14 erstreckt sich durch einen ersten Brandsohlen Durchbruch 24, die zweite plateauförmige Erhebung 48 durch einen zweiten Brandsohlen-Durchbruch 26, wobei die erste plateauförmige Erhebung 46 und die zweite plateauförmige Erhebung 48 vorzugsweise auf gleicher Ebene enden wie die Brandsohle 18.

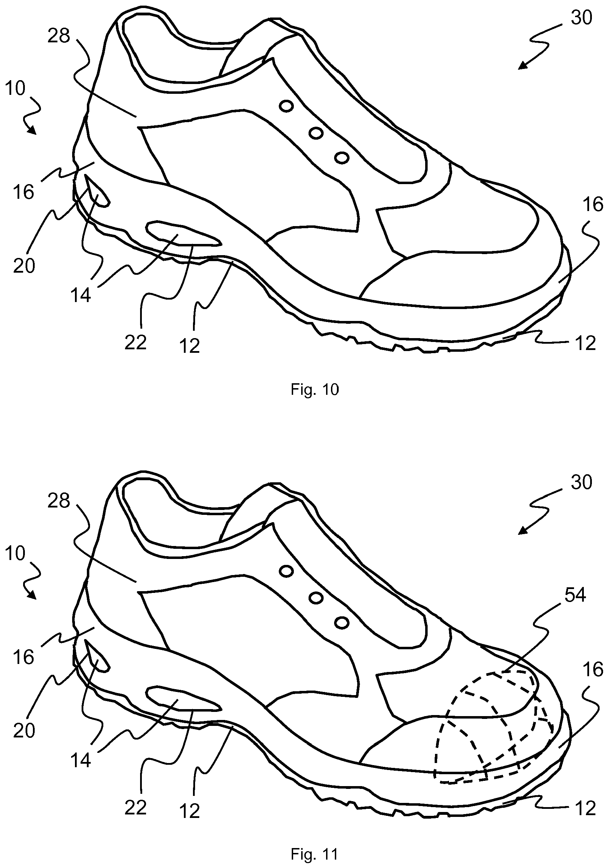

**Figur 10** zeigt in einer schematischen räumlichen Ansicht einen Sicherheitsschuh 30 mit der Sohle 10, die eine Laufsohle 12 und eine Zwischensohle 16 umfasst. Die Zwischensohle 16 weist einen Zwischensohlen-Durchbruch 20 im hinteren Fersen-Seitenbereich und einen Zwischensohlen-Durchbruch 22 im vorderen Fersen-Seitenbereich auf. Dargestellt ist ein rechter Schuh mit Blick auf die Außenristseite, wobei entsprechende Zwischensohlen-Durchbrüche auch auf der gegenüberliegenden Innenristseite angeordnet sind. Der Zwischensohlen-Durchbruch 20 im hinteren Fersen-Seitenbereich und der Zwischensohlen-Durchbruch 22 im vorderen Fersen-Seitenbereich lassen jeweils einen Blick von außen auf das dahinterliegende Dämpfungsmaterial 14 zu. Der mit der Sohle 10 verbundene Schuhschaft 28 enthält weitere Elemente, die nicht mehr durch Bezugszeichen gekennzeichnet sind.

**Figur 11** zeigt den Sicherheit 30 aus Figur 10, wobei zusätzlich noch durch Strichlinien der ungefähre Verlauf einer Schutzkappe 54 kenntlich gemacht ist.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Ansprüche zu verlassen. Es ist daher klar, dass eine Vielzahl von Variationsmöglichkeiten sowie Kombinationsmöglichkeiten von Elementen der hierin beschriebenen Ausführungsformen und Weiterbildungen existiert. Es ist ebenfalls klar, dass beispielhaft genannte Ausführungsformen wirklich nur Beispiele darstellen, die nicht als Begrenzung etwa des Schutzbereichs, der Anwendungsmöglichkeiten oder der Konfiguration der Ansprüche aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und weitergehenden Erläuterungen in der Beschreibung, definiert wird.

### Bezugszeichenliste

- 10: Sohle
- 12: Laufsohle
- 14: Dämpfungsmaterial
- 16: Zwischensohle
- 18: Brandsohle
- 20: Zwischensohlen-Durchbruch im hinteren Fersen-Seitenbereich
- 22: Zwischensohlen-Durchbruch im vorderen Fersen-Seitenbereich
- 24: erster Brandsohlen-Durchbruch
- 26: zweiter Brandsohlen-Durchbruch
- 28: Schuhschaft
- 30: Sicherheitsschuh
- 32: hinterer Fersen-Seitenbereich
- 34: mittlerer Fersen-Seitenbereich
- 36: vorderer Fersen-Seitenbereich
- 38: Fersenbereich
- 40: Längsgewölbe-Bereich
- 42: Vorderfußballen-Bereich
- 44: Zehenbereich
- 46: erste plateauförmige Erhebung
- 48: zweite plateauförmige Erhebung
- 50: erste seitliche Ausbuchtung
- 52: zweite seitliche Ausbuchtung
- 54: Schutzkappe

## Patentansprüche

1. Sohle (10) für einen Sicherheitsschuh (30), umfassend eine geschlossene Laufsohle (12), die Polyurethan, thermoplastisches Polyurethan und/oder Gummi, oder eine Kombination wenigstens zweier der vorgenannten Materialien umfasst, wobei die Laufsohle (12) eine Außenfläche und eine Innenfläche aufweist, weiterhin umfassend eine Brandsohle (18) sowie eine zwischen der Laufsohle (12) und der Brandsohle (18) angeordnete Zwischensohle (16) aus Polyurethan, wobei
- die Innenfläche der Laufsohle (12) mit der Zwischensohle (16) wenigstens abschnittsweise verbunden ist,
- die Zwischensohle (16) ein Dämpfungsmaterial (14), das expandiertes thermoplastisches Polyurethan und/oder expandiertes thermoplastisches Polyethylen umfasst, wenigstens teilweise umgibt, wobei zwischen der Laufsohle und dem Dämpfungsmaterial (14) eine durchgängige Lage der Zwischensohle angeordnet ist, und
- die Brandsohle (18) mit der Zwischensohle (16) wenigstens indirekt verbunden ist und das Dämpfungsmaterial (14) wenigstens teilweise abdeckt.
wobei die Zwischensohle (16) das Dämpfungsmaterial (14) an wenigstens einem Seitenbereich der Sohle (10) wenigstens teilweise abdeckt, vorzugsweise wenigstens 40 % einer Seitenfläche des Dämpfungsmaterials (14) abdeckt,
wobei die Zwischensohle (16) in wenigstens einem Teil eines Seitenbereichs der Sohle (10) mittels eines Zwischensohlen-Durchbruchs (20) im hinteren Fersen-Seitenbereich (32) und mittels eines Zwischensohlen-Durchbruchs (22) im vorderen Fersen-Seitenbereich (36) das Dämpfungsmaterial (14) nicht abdeckt,
und wobei das Dämpfungsmaterial (14)
- ein zusammenhängendes Formteil ist, das sich über 60 bis 90 % der Gesamtlänge der Sohle erstreckt, oder
- eine Anordnung mehrerer kleiner Formteile mit einer Erstreckung von wenigstens 1 cm darstellt.

2. Sohle (10) nach einem der vorhergehenden Ansprüche, **dadurch gekennzeichnet, dass** die Brandsohle (18) das Dämpfungsmaterial (14) wenigstens in einem Längsgewölbe-Bereich (40) und/oder in einem Zehenbereich (44) abdeckt.

3. Sohle (10) nach einem der vorhergehenden Ansprüche, **dadurch gekennzeichnet, dass** die Brandsohle (18) einen ersten Brandsohlen-Durchbruch (24) in einem Fersenbereich (38), und/oder einen zweiten Brandsohlen-Durchbruch (26) in einem Vorderfußballen-Bereich (42) aufweist und das Dämpfungsmaterial (14) in diesem Bereich/diesen Bereichen nicht abdeckt.

4. Sohle (10) nach einem der vorhergehenden Ansprüche, **dadurch gekennzeichnet, dass** das Dämpfungsmaterial (14) wenigstens eine der nachfolgenden Eigenschaften aufweist:
- ein Formteilgewicht (Materialdichte) gemäß ISO 845 im Bereich von 15 bis 320 kg/Kubikmeter,
- eine Bruchdehnung im Bereich von 100-200 %
- eine Rücksprungshöhe von mehr als 35 %, insbesondere eine Rücksprungshöhe im Bereich von 40-70 %

5. Sohle (10) nach Anspruch 4, **dadurch gekennzeichnet, dass** das Dämpfungsmaterial (14) ein expandiertes thermoplastisches Polyurethan umfasst, dessen Materialdichte im Bereich von 240-300 kg/Kubikmeter liegt.

6. Sohle (10) nach einem der vorhergehenden Ansprüche, **dadurch gekennzeichnet, dass** das Dämpfungsmaterial (14) als zusammenhängendes Formteil ausgebildet ist und
- an seiner Oberfläche eine erste plateauförmige Erhebung (46) aufweist, die darauf abgestimmt ist, sich durch den ersten Brandsohlen-Durchbruch (24) zu erstrecken und mit der Ebene der Brandsohle abzuschließen, und
- weiterhin eine zweite plateauförmige Erhebung (48) aufweist, die auf den zweiten Brandsohlen-Durchbruch (26) abgestimmt ist, und weiterhin
- eine erste seitliche Ausbuchtung (50) aufweist, die sich zum Zwischensohlen-Durchbruch im hinteren Fersen-Seitenbereich (20) erstreckt, sowie eine zweite seitliche Ausbuchtung (52) aufweist, die sich zum Zwischensohlen-Durchbruch im vorderen Fersen-Seitenbereich (22) erstreckt.

7. Sicherheitsschuh (30), umfassend eine Sohle (10) nach einem der Ansprüche 1 bis 6, sowie einen mit der Sohle (10) verbundenen Schuhschaft (28), wobei der Sicherheitsschuh (30) im Bereich der Vorderkappe des Schuhschafts (28) eine Schutzkappe (54) aufweist.

8. Sicherheitsschuh (30) nach Anspruch 7, **dadurch gekennzeichnet, dass** die Brandsohle (18) mit der Zwischensohle (16) über einen sich zwischen die Brandsohle (18) und die Zwischensohle (16) erstreckenden Anteil des Schuhschafts (28) indirekt verbunden ist.

9. Verfahren zur Herstellung einer Sohle (10) nach einem der Ansprüche 1 bis 6, umfassend:
- Bereitstellen der Laufsohle (12) in einem Formennest eines Besohlungswerkzeugs,
- Positionieren des Dämpfungsmaterials (14) gegenüber der Laufsohle (12),
- Einspritzen der Zwischensohle (16) in das Formennest und Aushärten,
- Verbinden mit einer Brandsohle (18).

10. Verfahren zur Herstellung eines Sicherheitsschuhs (30) nach einem der Ansprüche 7 bis 8, umfassend:
- Bereitstellen der Laufsohle (12) in einem Formennest eines Besohlungswerkzeugs,
- Positionieren des Dämpfungsmaterials (14) kontaktfrei gegenüber der Laufsohle (12),
- Einspritzen der Zwischensohle (16) in das Formennest und Aushärten unter Erhalt der Sohle (10),
- Verbinden der Sohle (10) mit einem Schuhschaft (28).

11. Verfahren nach Anspruch 10, **dadurch gekennzeichnet, dass** das Verbinden über ein Vernähen und/oder Verkleben erfolgt.

12. Verfahren zur Herstellung eines Sicherheitsschuhs (30) nach einem der Ansprüche 9-10, umfassend:
- Bereitstellen eines Schuhschafts (28) mit damit verbundener Brandsohle (18) auf einem Leisten,
- Fixieren des Dämpfungsmaterials (14) auf der Brandsohle (18),
- Bereitstellen der Laufsohle (12) in einem Formennest eines Besohlungswerkzeugs,
- Positionieren des Leistens mit dem Schuhschaft (28) und der Brandsohle (18) gegenüber der Laufsohle (12) im Formennest,
- Einspritzen der Zwischensohle (16) in das Formennest und Aushärten,
- Entformen und Entfernen des Leistens.

13. Verfahren nach Anspruch 12, **dadurch gekennzeichnet, dass** in der Brandsohle (18) ein erster Brandsohlen-Durchbruch (24) in einem Fersenbereich (38) und/oder ein zweiter Brandsohlen-Durchbruch (26) in einem Vorderfußballen-Bereich (44) bereitgestellt wird.

## Claims

1. Sole (10) for a safety shoe (30), comprising a closed outsole (12) which comprises polyurethane, thermoplastic polyurethane, and/or rubber or a combination of at least two of the aforementioned materials, wherein the outsole (12) has an outer surface and an inner surface, further comprising an insole (18) and a midsole (16) made of polyurethane which is arranged between the outsole (12) and the insole (18), wherein
- the inner surface of the outsole (12) is connected to the midsole (16) at least in sections,
- the midsole (16) at least partly surrounds a damping material (14) which comprises expanded thermoplastic polyurethane and/or expanded thermoplastic polyethylene, wherein a continuous layer of the midsole is arranged between the outsole and the damping material (14), and
- the insole (18) is at least indirectly connected to the midsole (16) and at least partly covers the damping material (14),
wherein the midsole (16) covers at least a part of the damping material (14), preferably at least 40% of a side area of the damping material (14) in at least a side area of the sole (10),
wherein the midsole (16) does not cover the damping material (14) in at least a part of a side area of the sole (10) by means of an intersole breakthrough (20) in the rear heel side region (32) and by means of an intersole breakthrough (22) in the front heel side region (36), and wherein the damping material (14)
- is a continuous moulded part which extends over 60 to 90% of the total length of the sole, or
- represents an arrangement of a plurality of small moulded parts with an extension of at least 1 cm.

2. Sole (10) according to one of the preceding claims, **characterized in that** the insole (18) covers the damping material (14) at least in a longitudinal arch region (40) and/or in a toe region (44).

3. Sole (10) according to one of the preceding claims, **characterized in that** the insole (18) has a first insole breakthrough (24) in a heel region (38) and/or a second insole breakthrough (26) in a forefoot ball region (42) and does not cover the damping material (14) in this/these region(s).

4. Sole (10) according to one of the preceding claims, **characterized in that** the damping material (14) has at least one of the following properties:
- a part weight (material density) according to ISO 845 in the range from 15 to 320 kg/cubic metre,
- an elongation at break in the range from 100-200%,
- a rebound height of more than 35%, in particular a rebound height in the range from 40-70%.

5. Sole (10) according to claim 4, **characterized in that** the damping material (14) comprises an expanded thermoplastic polyurethane whose material density is in the range from 240-300 kg/cubic metre.

6. Sole (10) according to one of the preceding claims, **characterized in that** the damping material (14)is embodied as a continuous moulded part and
- has a first plateau-like prominence (46) on its surface, which is designed to extend through the first insole breakthrough (24) and terminate flush with the plane of the insole, and
- further has a second plateau-like prominence (48) which is designed to match the second insole breakthrough (26), and further
- has a first lateral bulge (50) which extends as far as the intersole breakthrough in the rear heel side region (20), and a second lateral bulge (52) which extends as far as the intersole breakthrough in the front heel side region (22).

7. Safety shoe (30) comprising a sole (10) according to any one of claims 1 to 6, and a shoe upper (28) connected to the sole (10), wherein the safety shoe (30) has a protective cap (54) in the region of the toe cap of the shoe upper (28).

8. Safety shoe (30) according to Claim 7, **characterized in that** the insole (18) is connected indirectly to the midsole (16) via a portion of the shoe upper (28) which extends between the insole (18) and the midsole (16) .

9. Method for manufacturing a sole (10) according to any one of Claims 1 to 6, comprising:
- providing the outsole (12) in a mould cavity of a soling tool,
- positioning the damping material (14) opposite the outsole (12),
- injecting the midsole (16) into the mould cavity and curing,
- connecting with an insole (18).

10. Method for producing a safety shoe (30) according to one of Claims 7 to 8, comprising:
- providing the outsole (12) in a mould cavity of a soling tool,
- positioning the damping material (14) opposite the outsole (12),
- injecting the midsole (16) into the mould cavity and curing to obtain the sole (10),
- connecting the sole (10) to a shoe upper (28).

11. Method according to Claim 10, **characterized in that** the connection is made by sewing and/or bonding.

12. Method for producing a safety shoe (30) according to any of Claims 9 to 10, comprising:
- providing a shoe upper (28) with insole (18) attached thereto on a last,
- fixing the damping material (14) on the insole (18),
- providing the outsole (12) in a mould cavity of a soling tool,
- positioning the last with the shoe upper (28) and the insole (18) opposite the outsole (12) in the mould cavity,
- injecting the midsole (16) into the mould cavity and curing,
- demoulding and removing the last.

13. Method according to Claim 12, **characterized in that** in the insole (18) a first insole breakthrough (24) is provided in a heel region (38) and/or a second insole breakthrough (26) is provided in a forefoot ball region (44) in the insole.

## Revendications

1. Semelle (10), destinée à une chaussure de sécurité (30), comprenant une semelle d'usure (12) fermée, qui comprend du polyuréthane, du polyuréthane thermoplastique et/ou du caoutchouc, ou une association d'au moins deux des matières précédemment citées, la semelle d'usure (12) comportant une surface extérieure et une surface intérieure, comprenant par ailleurs une semelle première (18), ainsi qu'une semelle intercalaire (16) en polyuréthane placée entre la semelle d'usure (12) et la semelle première (18),
- la surface intérieure de la semelle d'usure (12) étant assemblée au moins par endroits avec la semelle intercalaire (16),
- la semelle intercalaire (16) entourant au moins partiellement une matière amortisseuse (14), qui comprend du polyuréthane thermoplastique expansé et/ou du polyéthylène thermoplastique expansé, entre la semelle d'usure et la matière amortisseuse (14) étant placée une couche continue de la semelle intercalaire, et
- la semelle première (18) étant assemblée au moins indirectement avec la semelle intercalaire (16) et recouvrant au moins partiellement la matière amortisseuse (14),
la semelle intercalaire (16) recouvrant la matière amortisseuse (14) sur au moins une zone latérale de la semelle (10), de préférence au moins 40 % d'une surface latérale de la matière amortisseuse (14),
dans au moins une partie d'une zone latérale de la semelle (10), la semelle intercalaire (16) ne recouvrant pas la matière amortisseuse (14) au moyen d'un ajour dans la semelle intercalaire (20) dans la zone latérale arrière (32) du talon et au moyen d'un ajour dans la semelle intercalaire (22) dans la zone latérale avant (36) du talon, et la matière amortisseuse (14)
- étant une pièce moulée cohérente, qui s'étend sur de 60 à 90 % de la longueur totale de la semelle, ou
- représentant un agencement de plusieurs petites pièces moulées, d'une extension d'au moins 1 cm.

2. Semelle (10) selon l'une quelconque des revendications précédentes, **caractérisée en ce que** la semelle première (18) recouvre la matière amortisseuse (14) au moins dans une zone de voûte plantaire (40) et/ou dans une zone des orteils (44).

3. Semelle (10) selon l'une quelconque des revendications précédentes, **caractérisée en ce que** la semelle première (18) comporte un premier ajour dans la semelle première (24) dans une zone du talon (38), et/ou un deuxième ajour dans la semelle première (26) dans une zone de la plante de l'avant-pied (42) et ne recouvre pas la matière amortisseuse (14) dans cette zone/dans ces zones.

4. Semelle (10) selon l'une quelconque des revendications précédentes, **caractérisée en ce que** la matière amortisseuse (14) fait preuve d'au moins l'une des propriétés suivantes :
- un poids de la pièce moulée (densité de la matière) selon la norme ISO 845 de l'ordre de 15 à 320 kg/par mètre cube,
- un allongement à la rupture de l'ordre de 100- à 200 %
- une hauteur de retour de plus de 35 %, notamment une hauteur de retour de 40 à 70 %.

5. Semelle (10) selon la revendication 4, **caractérisée en ce que** la matière amortisseuse (14) comprend un polyuréthane thermoplastique expansé dont la densité de matière se situe dans l'ordre de 240 à 300 kg/par mètre cube.

6. Semelle (10) selon l'une quelconque des revendications précédentes, **caractérisée en ce que** la matière amortisseuse (14) est conçue sous la forme d'une pièce moulée cohérente et
- comporte sur sa surface une première élévation (46) en forme de plateau, qui est adaptée pour s'étendre à travers le premier ajour dans la semelle première (24) et pour se terminer sur le plan de la semelle première, et
- comporte par ailleurs une deuxième élévation (48) en forme de plateau, qui est adaptée au deuxième ajour dans la semelle première (26), et par ailleurs
- comporte un premier renflement (50) latéral, qui s'étend vers l'ajour dans la semelle intercalaire dans la zone latérale arrière (20) du talon, ainsi qu'un deuxième renflement (52), qui s'étend vers l'ajour dans la semelle intercalaire dans la zone latérale avant (22) du talon.

7. Chaussure de sécurité (30), comprenant une semelle (10) selon l'une quelconque des revendications 1 à 6, ainsi qu'une tige de chaussure (28) assemblée avec la semelle (10), dans la zone du bout de la tige de chaussure (28), la chaussure de sécurité (30) un calot protecteur (54).

8. Chaussure de sécurité (30) selon la revendication 7, **caractérisée en ce que** la semelle première (18) est indirectement assemblée avec la semelle intercalaire (16) par l'intermédiaire d'une portion de la tige de chaussure (28) s'étendant entre la semelle première (18) et la semelle intercalaire (16).

9. Procédé, destiné à fabriquer une semelle (10) selon l'une quelconque des revendications 1 à 6, comprenant :
- la mise à disposition de la semelle d'usure (12) dans une cavité de moule d'un outil de semelage,
- le positionnement de la matière amortisseuse (14) en rapport à la semelle d'usure (12),
- l'injection de la semelle intercalaire (16) dans la cavité de moule et la solidification,
- l'assemblage avec une semelle première (18).

10. Procédé, destiné à fabriquer une chaussure de sécurité (30) selon l'une quelconque des revendications 7 à 8, comprenant :
- la mise à disposition de la semelle d'usure (12) dans une cavité de moule d'un outil de semelage,
- le positionnement de la matière amortisseuse (14) sans contact en rapport à la semelle d'usure (12),
- l'injection de la semelle intercalaire (16) dans la cavité de moule et la solidification pour obtenir la semelle (10),
- l'assemblage de la semelle (10) avec une tige de chaussure (28).

11. Procédé selon la revendication 10, **caractérisé en ce que** l'assemblage s'effectue par l'intermédiaire d'une couture et/ou d'un collage.

12. Procédé, destiné à fabriquer une chaussure de sécurité (30) selon l'une quelconque des revendications 9 ou 10, comprenant :
- la mise à disposition d'une tige de chaussure (28) avec une semelle première (18) assemblée avec celle-ci sur un tasseau,
- la fixation de la matière amortisseuse (14) sur la semelle première (18),
- la mise à disposition de la semelle d'usure (12) dans une cavité de moule d'un outil de semelage,
- le positionnement du tasseau avec la tige de chaussure (28) et la semelle première (18) en rapport à la semelle d'usure (12) dans la cavité de moule,
- l'injection de la semelle intercalaire (16) dans la cavité de moule et la solidification,
- le démoulage et le retrait du tasseau.

13. Procédé selon la revendication 12, **caractérisé en ce que** dans la semelle première (18), on met à disposition un premier ajour dans la semelle première (24) dans une zone du talon (38) et/ou un deuxième ajour dans la semelle première (26) dans une zone de la plante de l'avant-pied (44).
